# EUROPEAN PATENT SPECIFICATION

(11) **EP 1 729 032 B1**
(45) Date of publication and mention of the grant of the patent: **18.06.2008**
(21) Application number: 06011291.9
(22) Date of filing: 31.05.2006
(51) Int. Cl.: F16G 13/00, C23C 10/40

(54) **Steel parts having high wear and abrasion resistance and method for manufacturing the same**
Stahlteile mit hoher Verschleiss- und Abriebfestigkeit und Herstellungsverfahren dafür
Eléments en acier avec une résistance à l'usure et à l'abrasion élevée et procédé pour leur fabrication

(30) Priority: 31.05.2005 JP 2005160122; 05.10.2005 JP 2005292512
(43) Date of publication of application: 06.12.2006
(73) Proprietor: Honda Motor Co., Ltd., Tokyo 107-8556 (JP)
(72) Inventor: Nakano, Satoshi, Konan-Shi Shiga 520-3213 (JP); Yoshikawa, Rihei, Konan-Shi Shiga 520-3213 (JP); Kawamura, Morinobu, Wako-shi Saitama 351-0193 (JP); Fujiwara, Akira, Wako-shi Saitama 351-0193 (JP)
(74) Representative: Böhm, Brigitte

(56) References cited:
- GB-A- 2 320 214
- JP-A- 56 041 370
- US-A- 2 685 545
- US-A- 4 099 993
- US-A- 4 711 676
- US-A1- 2002 031 687
- US-A1- 2003 087 747

## Description

### BACKGROUND OF THE INVENTION

The present invention relates to a steel parts useful to pin parts and so on which has high wear and abrasion resistance and a method for manufacturing the same.

### Description of the Related Art

In case of power transmission chains such as silent chains and roller chains and also primary drive chains, pin parts are usually worn out due to link rotation during chain driving. Therefore, there have been proposed many kinds of methods for improving the wear and abrasion resistance at a surface portion of pin parts.

For example, Japanese Tokkaishou No.56-41370 proposes an improved method for forming chromium carbide (Cr-C) layer on a surface of pin parts.

Further, Japanese Tokkaihei No.10-169723 proposes another improved method for forming at least one layer of metallic carbide selected from the group consisting of Cr, Ti, V and Nb on a surface of pin parts.

The former treated pins ((hereinafter referred as to Chromizing treated pins) and the latter treated pin (Vanadium Carbide layer is formed on the surface of pins; hereinafter referred as to V-C treated pins) both were subjected to a repeated test for wear and abrasion resistance by the present inventors. As a result, the following new knowledge was obtained.

In case of the chromizing treated pins, repeated high bearing load makes the surface of chromium carbide layer stripped out from the body surface, so that the pin surface is wearing out due to progress of the surface stripping. On the other hand, in case of the V-C treated pins, repeated high bearing load makes the V-C layer separated off at a boundary face between the V-C layer and the base metal of the pin parts, so that total V-C layer stripping from the base metal happens at once, that is, the surface abrasion is going in a rapid progress. Therefore, we researched both phenomenon during the above tests and found that Chromium Carbide (Cr-C) layer has a better property in adherence with the base metal portion but a low property in strength against bearing load, while Vanadium Carbide (V-C) has a better property in strength against bearing load because of good abrasion resistance but a low property in adherence. Further, it has been surprisingly found that dispersion of Vanadium Carbide and so on into Chromium Carbide layer at a same time of formation of Chromium Carbide on the base metal portion of steel parts, can improve its strength against bearing load without damaging its adherence property with the base metal portion.

Therefore, a main object of this invention is to provide a steel parts having an improved high wear and abrasion resistance even if it is used under a high bearing load.

Accordingly, from a first aspect of the present invention, there is provided a steel parts having high wear and abrasion resistance which comprises a base metal portion of carbon steel or alloy steel and a surface portion of chromium carbide dispersed with carbide particles selected from the group consisting of Vanadium Carbide(V-C), Titanium Carbide (Ti-C), Niobium Carbide(Nb-C), Tungsten Carbide(W-C), Hafnium Carbide(Hf-C) and Zirconium Carbide(Zr-C).

In a preferred embodiment of the present invention, the surface portion of chromium carbide dispersed with carbide particles may be formed in a thickness of 10µm or more, preferably more than 20µm by Chromium Carbide, into which the carbide particles to be dispersed may have a particle size of 3 µm or less, preferably 1 µm or less and also the carbide particles to be dispersed may have 40 % or more at an area ratio of said carbide particles to said surface portion of chromium carbide dispersed with carbide particles in said outermost surface portion of chromium carbide due to a reaction of carbide particles with the chromium carbide.

In a preferred embodiment that the chromium can be formed on a surface of the base metal by means of a powder packing method, the base metal may comprises carbon steel or alloy steel containing 0. 5~1. 2wt% of carbon.

Further, from a second aspect of the present invention, there is provided a method of manufacturing a steel parts having high wear and abrasion resistance which comprises;
providing a steel parts of carbon steel or alloy steel containing 0.5 to 1.2 wt% of carbon,
subjecting the steel parts to a chromium cementation treatment at a temperature of 1,000 to 1,100 °C with a cementing agent mainly consisting of carbide particles selected from the group consisting of V-C, Ti-C, Nb-C, W-C, Hf-C and Zr-C, metallic chromium and a sintering inhibitor to make an outermost surface of chromium carbide dispersed with carbide particles selected from the group consisting of V-C, Ti-C, Nb-C, W-C, Hf-C and Zr-C. In the present invention, although the chromium cementation treatment can be carried out at a temperature of more than 1,000 °C, and less than 1,100 °C is more economical.

In a preferred embodiment of the present invention, the carbide particles dispersed in the Chromium Carbide layer is formed at an area ratio(said carbide particles to said surface portion of chromium carbide dispersed with carbide particles) of more than 40%.

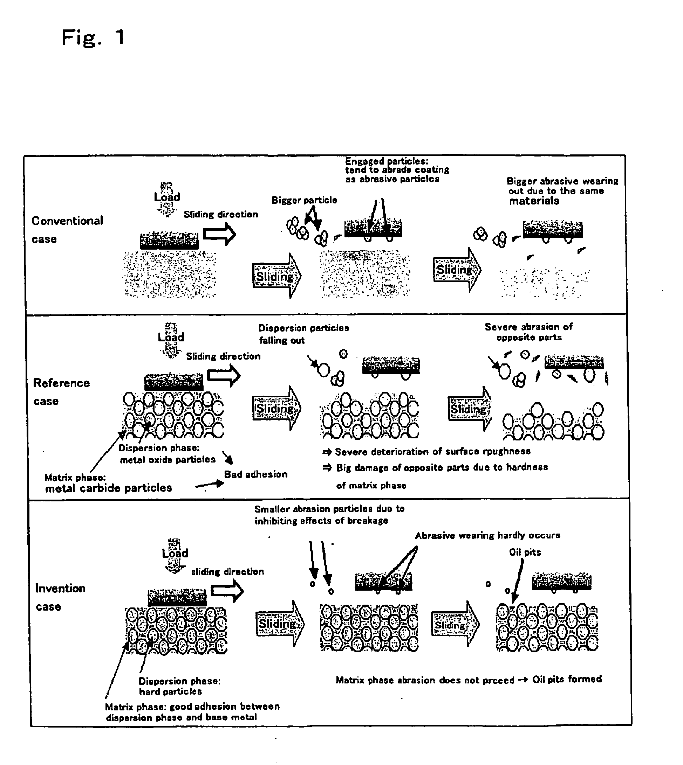

According to the present invention, more excellent results will be obtained as shown in Fig.1 in comparison with that of a conventional case of V-C layer and the reference case (Chromium Carbide layer dispersed with metal oxide particles).

In the conventional case, there is a tendency that a sliding action with load makes abrasion particles bigger and particles engaged with the sliding member makes the opposite sliding member easily worn out due to action as abrasive particles. Contrary to this, because of superior adhesive property between the dispersion particles and the base coating. Chromium Carbide layer in this invention, there is no tendency to make the dispersion particles falling out and crashing during their sliding movement. Comparing with the reference case of dispersion of the metal oxide particles as proposed in Japanese Tokkai 2003-139199, the invention has a better adhesion property between the dispersion particles and the matrix phase which does not make any tendency to fall the dispersion particles down. Further, due to the difference of wear and abrasion resistance between the matrix phase and the dispersion phase, micro-oil pits are formed to improve a property of keeping oil therein, thereby the good property for keeping oil improves the wear and abrasive resistance, especially Vanadium Carbide dispersion particles improving the adhesion property with the matrix phase(Chromium Carbide layer).

### BRIEF DESCRIPTION OF THE DRAWINGS

The above and other objects, features and advantages of the present invention will be apparent from the following detailed description of the preferred embodiments of the invention in conjunction with the accompanying drawings, in which:
Fig.1 is an explanatory view showing a comparison table between the conventional types I, II and the inventive parts.
Fig.2 is a perspective view showing a process of powder packing according to the present invention.
Fig.3 is a microscope photograph showing a surface micro-structure of the inventive pin parts I and II for chains.
Fig.4 is a graph showing a result of sliding test using the conventional pins and the inventive parts I and II.
Fig.5 is an illustration showing a method of wearing and abrasion test for pins.
Fig.6 is a graph showing a comparison result of sliding test for pins treated by the conventional method, the inventive method and another method of carbide treatment.

### DETAILED DESCRIPTION OF THE PREFERRED EMBODIMENTS

The preferred embodiments of the invention will be explained in conjunction with the accompanying drawings.

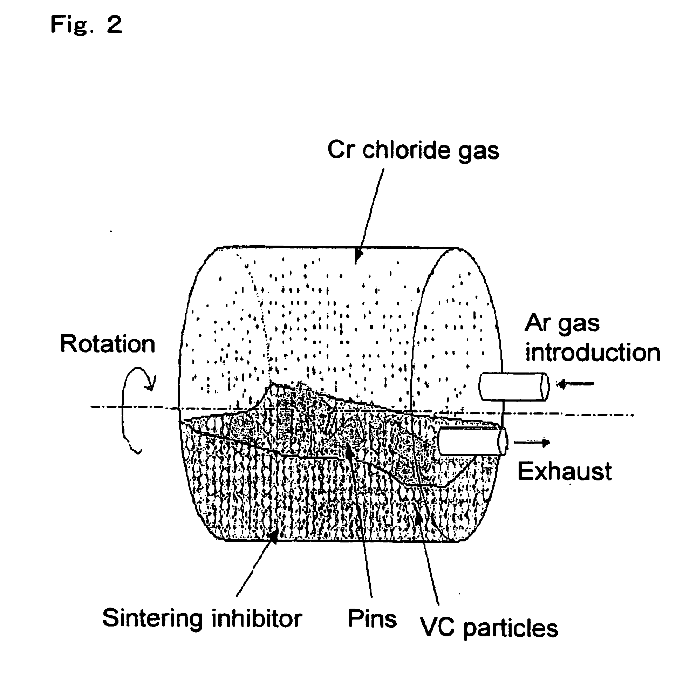

Pins for chain are prepared from a carbon steel containing 0.5 to 1.2 % of carbon and are subjected to a chromizing treatment where the pins are treated in a rotary furnace as shown in Fig.2 provided with a chromizing composition comprising Vanadium Carbide (V-C) particles shown in Table 1, Cr-contained powders such as Metallic Cr, Sintering inhibitor such as Alumina(Al₂O₃) and Promoter such as halides including NH₄Cl and so on under a condition where argon gas is introduced into the rotary kiln. The result is shown in TABLE 2.

**TABLE 1**

| | Chromizing Compositon | | | | | Treating Condition | |
|---|---|---|---|---|---|---|---|
| | Cr(%) | FeV(%) | Al₂O₃(%) | NH₄Cl(%) | V-C particle(%) | Temp. (°C) | Time(hr) |
| Conventional case | 25.0 | 2.5 | 72 | 0.5 | | 970 | 8 |
| Ref. case | 5.5 | | 90 | 0.5 | 4 | 970 | 15 |
| Invention case | 5.5 | | 90 | 0.5 | 4 | 1050 | 15 |

**TABLE 2**

| | Thickness of Alloy Layer (µm) | | | | Hardness (Hv) | V-C area ratio(%) | Average Particle Diameter (*µ*m) |
|---|---|---|---|---|---|---|---|
| | Outer layer | | | Inner layer | | | |
| | V-C dispersed Cr-C layer | | V-C layer | Cr-C layer | Outer layer | | |
| | V-C particle non-reaction layer | V-C particle reaction layer | | | | | |
| Conv. case | | | 20 | 2 | 2600 | | |
| Ref. case | 21 | | | 6 | 1839 | 34.8 | 6.3 |
| Invention case | | 28 | | 6 | 1731 | 44.5 | 2.3 |

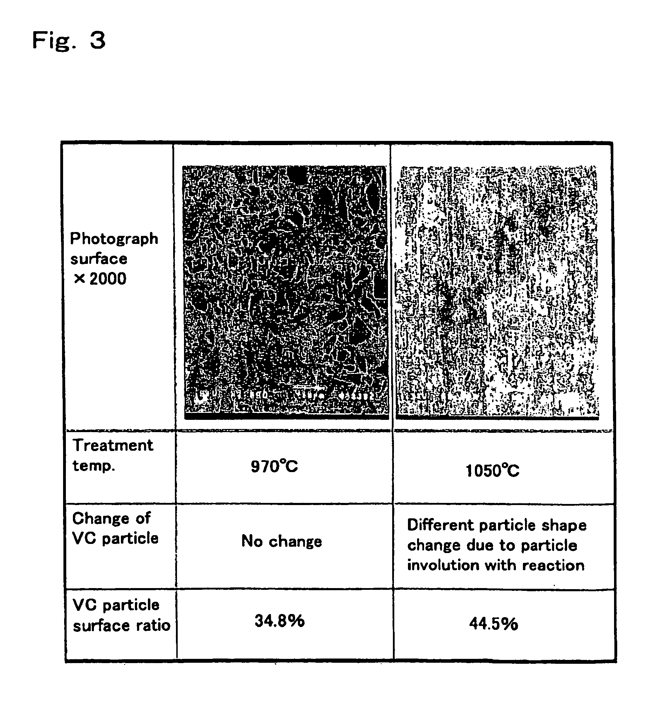

Fig.3 is a microscope photograph showing a surface micro-structure of the inventive pin parts I and II for chains which are treated at temperatures of 970°C and 1050°C.

As shown in the figures, it is observed that a layer of Chromium Carbide containing Vanadium Carbide particles is formed at an outermost portion of the surface portion of chromium carbide on the base metal and Vanadium Carbide particles shows a superior property in adherence with the Chromium Carbide matrix phase layer.

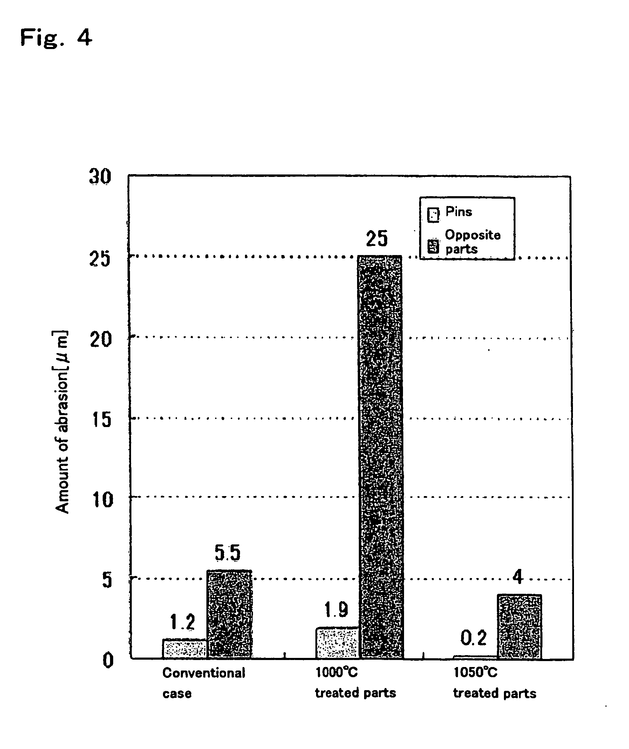

Fig.4 is a graph showing a result of sliding test using the conventional pins and the inventive parts I and II.

Summary of results said that when a treatment temperature is 970°C, there is a problem in adherence while when the treatment temperature is over 1000°C, a reaction between Vanadium Carbide particles and Chromium Carbide matrix occurs and makes Vanadium Carbide particles involved into Chromium Carbide layer, resulting in a good adherence between Vanadium Carbide dispersion particles and Chromium Carbide matrix layer. Higher the area ratio of Vanadium Carbide in Chromium Carbide layer, better the wear and abrasion resistance so that it is preferred to make the area ratio of Vanadium Carbide in the Chromium Carbide matrix layer more than 40 %.

The area ratio of V-C particles in the Cr-C matrix means an area ratio of carbide particles to the surface portion of Cr-C matrix dispersed with carbide particles and the method of measuring the area ratio is as follows.

A determined sectional view is subjected to a well-known processing of binary image containing two objects Cr(Cr-C)and V(V-C)and the area ratio of V part to the surface portion of Cr-C matrix is measured.

Further, according to the inventive method, Chromium Carbide layer is preferably formed at a thickness of more than 10 µm, more preferably more than 20µm.

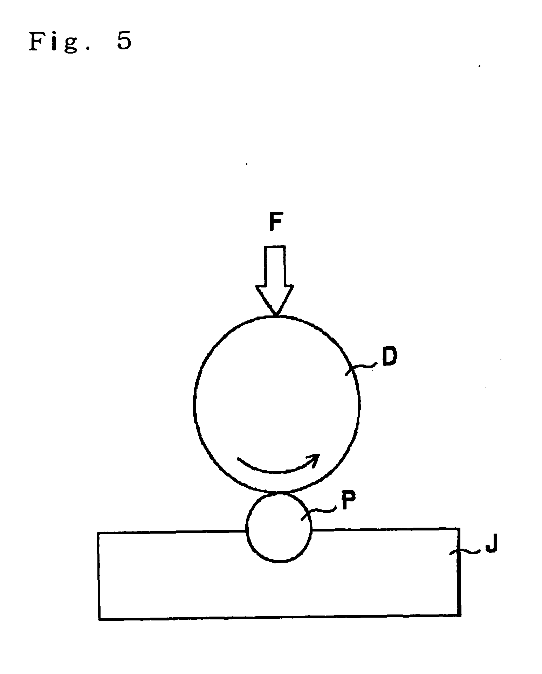

A wearing test used herein is shown in Fig.5 where pins P to be tested are secured by a jig J and are pressed with a predetermined pressure (load) by a disc D rotating at a predetermined speed of rotation. After that, it is observed whether the hardened layer is provided with or without peeling.

In those embodiments, we confirmed that:
(i) Chromium Carbide matrix phase shows a good adhesion property with Vanadium Carbide having a high strength against bearing load as well as with the base metal portion, thereby abrasion particles become smaller due to improved inhibiting effects of breakage by dispersion particles.
(ii ) Further, abrasive wearing hardly occurs because abrasive powders of the matrix phase are generated, but the dispersion particles is superior in wearing and abrasion resistance to that of the matrix phase.
(iii) Furthermore, since the bearing load can be almost burden by the dispersion particles and hardly burden by the matrix phase particles, the wearing and abrasion of contacting surface does not proceed with ease. That is, the wearing and abrasion proceeds slowly and makes oil-pits which improves the resistance of wearing and abrasion for pins.

According to the present invention, the chain pins are manufactured by the following method substantially the same as a conventional method except a treating temperature and a chromizing composition.

Firstly, as base metals, carbon steels used for bearings and mechanical structures are provided and subjected to a treatment for Cr penetration and V-C particle diffusion at a temperature of 1000 to 1100°C. During the treatment, on the outermost surface of base metal there is formed a layer of Cr-C, on which there is further formed an additional complex layer made of V-C particles dispersed into the Cr-C layer. The V-C particles react in the layer of Cr-C and the reaction makes the area ratio of the V-C particles to the surface portion of Cr-C matrix increased up to more than 40 %.

### [The 2nd Examples]

In place of forming the complex layer of Vanadium Carbide and Chromium Carbide on the outermost portion of the base metal of pins, one or more than two of the following Carbides selected from the group consisting of Titanium Carbide, Niobium Carbide, Tungsten Carbide, Vanadium Carbide, Hafnium Carbide and Zirconium Carbide is used as the dispersion particles into the Chromium Carbide layer to obtain the dispersed Chromium Carbide layer on the outmost portion of Chromium Carbide layer on the base metal according to the same method as the 1st Example.

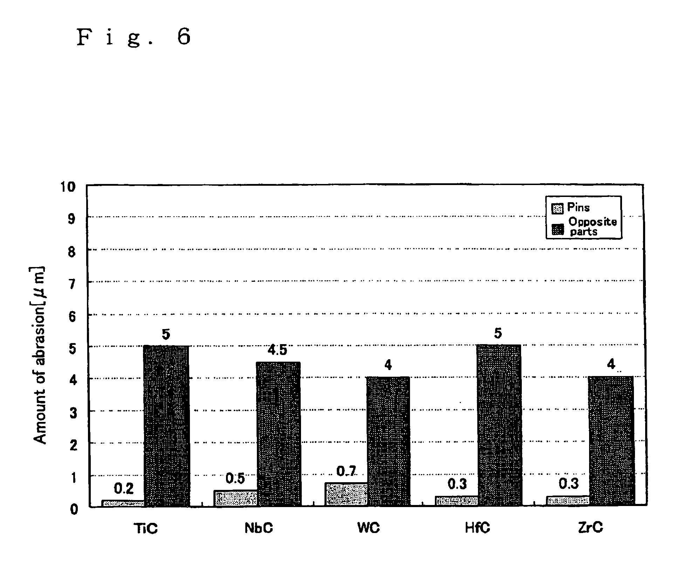

The resulting pin parts are subjected to the same test as used in the 1st Example. The results are shown in TABLE 3, 4 and Fig. 6.

**TABLE 3**

| | Penetration Agent Composition | | | | Treatment Condition | |
|---|---|---|---|---|---|---|
| Dispersion Carbide | Metallic Cr(%) | Al₂O₃(%) | NH₄Cl(%) | Carbide(%) | Temp. (°C) | Keeping Time(hr) |
| Ti-C | 5.5 | 90 | 0.5 | 4 | 1050 | 15 |
| Nb-C | 5.5 | 90 | 0.5 | 4 | 1050 | 15 |
| W-C | 5.5 | 90 | 0.5 | 4 | 1050 | 15 |
| Hf-C | 5.5 | 90 | 0.5 | 4 | 1050 | 15 |
| Zr-C | 5.5 | 90 | 0.5 | 4 | 1050 | 15 |

**TABLE 4**

| Dispersion Carbide | Thickness of Alloy Layer (*µ*m) | | Hardness of outer layer (Hv) | Carbide particle area ratio(%) | Average particle diameter (*µ*m) |
|---|---|---|---|---|---|
| | Outer layer | Inner layer | | | |
| | Carbide dispersion Cr-C layer | Cr-C layer | | | |
| Ti-C | 24 | 5 | 2143 | 41.3 | 2.2 |
| Nb-C | 25 | 6 | 1857 | 42.6 | 2.1 |
| W-C | 29 | 6 | 1634 | 43.8 | 2.5 |
| Hf-C | 28 | 6 | 2056 | 42.7 | 2.4 |
| Zr-C | 27 | 5 | 1946 | 43.2 | 2.4 |

A steel parts having an improved high wear and abrasion resistance is provided. The steel parts can be manufactured by a method wherein a steel parts containing 0.5 to 1.2 wt% of carbon is subjected to a chromium cementation treatment at a temperature of 1,000 to 1,100 °C with a cementing agent mainly consisting of carbide particles selected from the group consisting of Vanadium Carbide, Titanium Carbide, Niobium Carbide, Tungsten Carbide, Hafnium Carbide and Zirconium Carbide; metallic chromium and a sintering inhibitor to make an outermost surface of chromium carbide formed on the steel parts being dispersed with carbide particles selected from the group consisting of Vanadium Carbide, Titanium Carbide, Niobium Carbide, Tungsten Carbide, Hafnium Carbide and Zirconium Carbide.

## Claims

1. A steel parts having high wear and abrasion resistance which comprises a,base metal portion of carbon steel or alloy steel and a surface portion of chromium carbide dispersed with at least one kind of carbide particles selected from the group consisting of Vanadium Carbide, Titanium Carbide, Niobium Carbide, Tungsten Carbide, Hafnium Carbide and Zirconium Carbide.

2. The steel parts having high wear and abrasion resistance according to claim 1, wherein said dispersed carbide particles have a particle diameter of less than 3 µ m.

3. The steel parts having high wear and abrasion resistance according to claim 1 or 2, wherein an area ratio of said carbide particles to said surface portion of chromium carbide dispersed with carbide particles is more than 40 %.

4. The steel parts having wear and abrasion resistance according to any one of claims 1 to 3, wherein said surface portion of chromium carbide dispersed with carbide particles has a thickness of more than 10 µm.

5. The steel parts having wear and abrasion resistance according to any one of claims 1 to 4, wherein said base metal comprises carbon steel or alloy steel having 0.5 to 1.2 weight % of Carbon.

6. A method of manufacturing a steel parts having wear and abrasion resistance which comprises;
providing a steel parts of carbon steel or alloy steel containing 0.5 to 1.2 wt% of carbon,
subjecting the steel parts to a chromium cementation treatment at a temperature of 1,000 to 1,1000°C with a cementing agent mainly consisting of carbide particles selected from the group consisting of Vanadium Carbide, Titanium Carbide, Niobium Carbide, Tungsten Carbide, Hafnium Carbide and Zirconium Carbide; metallic chromium and a sintering inhibitor to make a surface portion of chromium carbide on said steel parts being dispersed with carbide particles selected from said group.

7. A method of manufacturing a steel parts having wear and abrasion resistance according to claim 6, wherein said carbide particles is formed in said surface portion of chromium carbide at an area ratio of said carbide particles to said surface portion dispersed with carbide particles having more than 40% with a reaction during the chromium cementation treatment.

## Patentansprüche

1. Stahlteile mit hoher Verschleiß- und Abriebfestigkeit die einen Metallbasisanteil aus Karbonstahl oder legiertem Stahl und einen Oberflächenanteil aus Chromcarbid umfassen, der mit mindestens einer Art von Carbidpartikeln ausgewählt aus der Gruppe bestehend aus Vanadiumcarbid, Titancarbid, Niobcarbid, Wolframcarbid, Hafniumcarbid und Zirkoniumcarbid dispergiert ist.

2. Stahlteile mit hoher Verschleiß- und Abriebfestigkeit nach Anspruch 1, wobei die dispergierten Carbidpartikel einen Partikeldurchmesser von weniger als 3 µm haben.

3. Stahlteile mit hoher Verschleiß- und Abriebfestigkeit nach Anspruch 1 oder 2, wobei ein Flächenverhältnis der Carbidpartikel zu dem Oberflächenanteil aus Chromcarbid, der mit Carbidpartikeln dispergiert ist, größer als 40% ist.

4. Stahlteile mit hoher Verschleiß- und Abriebfestigkeit nach einem der Ansprüche 1 bis 3, wobei der Oberflächenanteil aus Chromcarbid, der mit Carbidpartikeln dispergiert ist, eine Dicke von mehr als 10 µm hat.

5. Stahlteile mit hoher Verschleiß- und Abriebfestigkeit nach einem der Ansprüche 1 bis 4, wobei die Metallbasis Karbonstahl oder legierten Stahl mit 0,5 bis 1,2 Gewichts-% Kohlenstoff umfasst.

6. Verfahren zur Herstellung von Stahlteilen mit hoher Verschleiß- und Abriebfestigkeit, umfassend
Stahlteile aus Karbonstahl oder legiertem Stahl bereitzustellen, enthaltend 0,5 bis 1,2 Gewichts-% Kohlenstoff
die Stahlteile einer Chrom-Zementierungs-Behandlung zu unterziehen bei einer Temperatur von 1000 bis 1100°C mit einem Zementierungsmittel, das hauptsächlich aus Carbidpartikeln, ausgewählt aus der Gruppe bestehend aus Vanadiumcarbid, Titancarbid, Niobcarbid, Wolframcarbid, Hafniumcarbid und Zirkoniumcarbid; metallischem Chrom und einem Sinterungsinhibitor besteht, um einen Oberflächenanteil aus Chromcarbid auf den Stahlteilen herzustellen, die mit Carbidpartikeln, die aus dieser Gruppe ausgewählt sind, dispergiert sind.

7. Verfahren zur Herstellung von Stahlteilen mit hoher Verschleiß- und Abriebfestigkeit nach Anspruch 6, wobei die Carbidpartikel in dem Oberflächenanteil aus Chromcarbid mit einem Flächenverhältnis der Carbidpartikel zu dem Oberflächenanteil, der mit Carbidpartikeln dispergiert ist, von mehr als 40% in einer Reaktion während der Chrom-Zementierungs-Behandlung gebildet werden.

## Revendications

1. Pièce en acier présentant une résistance à l'usure et à l'abrasion élevée qui comprend une partie métallique de base en acier au carbone ou en alliage d'acier et une partie de surface en carbure de chrome dispersée avec au moins un type de particules de carbure choisi dans le groupe constitué par le carbure de vanadium, le carbure de titane, le carbure de niobium, le carbure de tungstène, le carbure de hafnium et le carbure de zirconium.

2. Pièce en acier présentant une résistance à l'usure et à l'abrasion élevée selon la revendication 1, dans lequel lesdites particules de carbure dispersées ont un diamètre de particule de moins de 3 µm.

3. Pièce en acier présentant une résistance à l'usure et à l'abrasion élevée selon la revendication 1 ou 2, dans lequel la proportion de surface desdites particules de carbure par rapport à ladite partie de surface de carbure de chrome dispersée avec les particules de carbure est de plus de 40 %.

4. Pièce en acier présentant une résistance à l'usure et à l'abrasion élevée selon l'une quelconque des revendications 1 à 3, dans lequel ladite partie de surface de carbure de chrome dispersée avec les particules de carbure a une épaisseur de plus de 10 µm.

5. Pièce en acier présentant une résistance à l'usure et à l'abrasion élevée selon l'une quelconque des revendications 1 à 4, dans lequel ledit métal de base comprend de l'acier au carbone ou un alliage d'acier ayant un pourcentage en poids de carbone de 0,5 à 1,2 %.

6. Procédé de fabrication d'une pièce en acier présentant une résistance à l'usure et à l'abrasion élevée, comprenant :
la fourniture d'une pièce en acier en acier au carbone ou en alliage d'acier contenant de 0,5 à 1,2 % en poids de carbone,
le fait de soumettre la pièce en acier à un traitement de cémentation au chrome à une température de 1 000 à 1 100 °C avec un agent de cémentation principalement constitué de particules de carbure choisies dans le groupe constitué par le carbure de vanadium, le carbure de titane, le carbure de niobium, le carbure de tungstène, le carbure de hafnium et le carbure de zirconium ; de chrome métallique et d'un inhibiteur de frittage pour fabriquer une partie de surface de carbure de chrome sur ladite pièce en acier dispersée avec les particules de carbure choisies dans ledit groupe.

7. Procédé de fabrication d'une pièce en acier présentant une résistance à l'usure et à l'abrasion élevée, selon la revendication 6, dans lequel lesdites particules de carbure sont formées dans ladite partie de surface de carbure de chrome à une proportion de la surface desdites particules de carbure sur ladite partie de surface dispersée avec les particules de carbure de plus de 40 % avec une réaction pendant le traitement de cémentation au chrome.
